# EUROPEAN PATENT SPECIFICATION

(11) **EP 2 053 924 B1**
(45) Date of publication and mention of the grant of the patent: **02.06.2010**
(21) Application number: 07837142.4
(22) Date of filing: 21.08.2007
(51) Int. Cl.: A23G 4/20, A23G 4/06, A23L 1/22

(54) **COATED CHEWING GUM PRODUCTS**
BESCHICHTETE KAUGUMMIPRODUKTE
GOMMES À MÂCHER ENROBÉES

(30) Priority: 25.08.2006 US 840317 P
(43) Date of publication of application: 06.05.2009
(73) Proprietor: WM. Wrigley Jr., Company, Chicago, IL 60611 (US)
(72) Inventor: CHITIKOV, Sofia, Chicago, IL 60661 (US); GRASELA, Dianna, Aurora, IL 60504 (US); SITLER, Daniel, J., Naperville, IL 60565 (US)
(74) Representative: Hayes, Adrian Chetwynd
(86) International application number: PCT/US2007/018485
(87) International publication number: WO 2008/027251

(56) References cited:
- EP-A- 1 457 522
- US-A- 4 317 838

## Description

### BACKGROUND

The present invention relates to coated chewing gum products. In particular, it relates to coated chewing gum products containing at least three flavors multiple flavors in the core.

Coated chewing gum products are well known. Many patents disclose chewing gum products coated with sugar sweeteners or polyol sweeteners. U.S. Pat. No. 4,317,838, for example, discloses a method of applying a sugarless coating to chewing gum. The coating may include calcium carbonate as an antisticking agent. Synthetic sweeteners, including many different high-intensity sweeteners, are also suggested for use in the coating.

There is a need for a way to make coated chewing gum products that include multiple flavors in the gum center and high-intensity sweeteners in the coating and that allows the high-intensity sweetener to be well distributed in the coating.

### BRIEF SUMMARY

In one aspect, a coated chewing gum product includes a core and a coated portion surrounding the core. The core includes gum base, a liquid flavor portion, and particles including a compounded flavor. The liquid flavor portion includes a mint flavor and a fruit flavor. The coating portion surrounding the core includes a coating flavor.

In another aspect, a method of making a coated chewing gum product includes providing particles comprising a compounded flavor. A liquid flavor portion including a mint flavor and a fruit flavor is provided. The particles and the liquid flavor portion are mixed with gum base to provide chewing gum cores. A coating syrup including a coating flavor is applied to the cores. The syrup is dried to produce a coating on the cores.

The foregoing and other features and advantages of the present invention will become apparent from the following detailed description of the presently preferred embodiments, when read in conjunction with the accompanying examples.

### DETAILED DESCRIPTION OF THE PREFERRED EMBODIMENTS

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The present invention is directed to a coated chewing gum product with multiple flavors. In particular, the coated chewing gum product includes a core or center with at least two types of flavor and a flavored coating portion surrounding the core. The core includes particles containing a compounded flavor, which may be a mint flavor. The core also includes a liquid flavor portion. The liquid flavor portion includes a mint flavor and a fruit flavor. The coating portion surrounding the core includes a coating flavor, which may be a mint flavor. When chewed by the user, the coated chewing gum may provide an initial intense mint flavor, followed by a subtle fruit flavor.

The liquid flavor portion in the core includes a mint flavor and a fruit flavor. By "liquid flavor portion" is meant that the flavors begin at some point in liquid form, such as an oil. The liquid flavor portion does not necessarily retain a liquid form after it is incorporated into the chewing gum product.

The fruit flavor in the core may be various non-sour mild fruit flavors such as berry, melon, lime, pear, lavender, grape, apple, peach, lemon, tea-type flavors, or mixtures thereof. The mint flavor in the core may be peppermint, spearmint, or wintergreen. The mass ratio of the mint flavor to the fruit flavor is between about 1:1 and about 10:1. In the case of peppermint flavor, it may be mostly peppermint with some added spearmint notes or with other added notes such as menthol, eucalyptus, or wintergreen. In the case of spearmint flavor, there may be some added peppermint notes or other added notes such as menthol, eucalyptus, or wintergreen. Wintergreen flavor contains methyl salicylate, and may also contain menthol, eucalyptol, and spearmint or peppermint flavor notes. In addition, the mint flavor in the core may contain a variety of physiological cooling agents such as p-menthane carboxamide, acyclic carboxamides, menthyl succinate, menthyl lactate, and other types of coolants.

The particles in the core are formed from a flavor compounded with binders or other agents. The particles will typically range in size from about 200 to about 850 microns, preferably between about 400 and 700 microns. The compounded flavor is typically a mint type flavor. The flavor may have added flavor notes such as with menthol or eucalyptol or other coolants such as physiological cooling agents. In one embodiment, the particles do not provide any fruit flavor. The particles may also contain color so as to distinguish the compounded flavor from the gum base and the other flavors in the chewing gum. Various types of compounded flavors may be used and prepared by various techniques known in the art. Some of these include extrusion or coextrusion, spray cooling or spray chilling, coacervation, fluid bed coating, or granulation or agglomeration. These methods can be used to make powdered flavors. Agglomeration methods can be used to increase the size of the particles. This can be done by agglomeration by recrystallization, by use of film forming binders, and by layering. These various types of products are offered by the various flavor suppliers such as EVOGRAN from Symrise, INSTANTIFF by International Flavors & Fragrances, or ULTRASEAL or GRANUSEAL by Givaudan. Examples of extruded matrixes are Durarome and Flexarome from Firmenich and Cap Lock from International Flavors and Fragrances. A particularly useful type of particle including a compounded flavor is called Q-PEARLS and is available from Quest. This material contains flavors that are made by agglomerated layers and makes very stable particulates in chewing gum. The particles do not break during mixing of the gum, the color does not leak into gum, and it has slow release properties. The particle size of the QPEARLS may range between 200 microns and 850 microns, with about half of the particles between 400 and 700 microns.

The coating flavor is provided in the coating over the chewing gum core. The flavor in the coating may be a mint flavor. The mint flavor may be spearmint or peppermint. In the case of spearmint, there may be some added peppermint notes or other added notes such as menthol, eucalyptus, or wintergreen. The coating may be made with one or more sugars such as sucrose, dextrose, maltose, or palatinose, or polyols such as sorbitol, maltitol, isomalt, xylitol, lactitol, or erythritol. Binders optionally used in the coating include gum arabic, natural gums, maltodextrins, modified starches or hydrocolloids such as cellulosics or gelatin. The flavor may be added as a liquid during one or several of the liquid coating additions, then dried as another coating layer is added. The flavor may also be added as a dry powder addition if a dry charge addition is used in the coating process. The coating flavor may be a mint flavor, but may contain other additives such as menthol, eucalyptus, wintergreen, and other cooling agents. In one embodiment, the coating does not provide any fruit flavor.

The various flavors can be used in amounts of about 0.1 to about 15 weight percent of the gum, and preferably, about 0.2% to about 5% by weight.

The coated chewing gum may be include sugar, or be sugarless. For coated chewing gum with sugar, the core generally contains sugar, gum base, and corn syrup. The coating preferably contains sugar and a binder.

For sugarless coated chewing gum, the core generally contains gum base, calcium carbonate, and a polyol. Gum arabic may be used in coatings of sugarless gum cores and acts as a binder, film former, and hardener of the coated pellet. Calcium carbonate can also be used in sugarless coatings with xylitol, sorbitol, maltitol, lactitol, hydrogenated isomaltulose, and erythritol. For xylitol and erythritol coatings a binder, film former and hardener is needed to make an acceptable product. For sorbitol, maltitol, lactitol, and hydrogenated isomaltulose coating, gum Arabic is used as a binder and film former, but also as crystallization modifier to help facilitate coating.

For sugarless coating, one polyol that may be used is maltitiol. Maltitol powder is used to dry charge in the early stages of maltitol coating. Maltitol, gum arabic, whitener, and sweetener can be blended with a solvent into a first coating syrup and maltitol, gum arabic and whitener can be blended with a solvent into a second coating syrup, which can be successively applied to the gum pellets. Flavor may be added at anytime between coats 10 and 30. Calcium carbonate may be applied with the first coating syrup, but in some cases, calcium carbonate may be blended with powdered maltitol as a dry charge. After all of the coating is applied and dried, talc and wax is added to give a polish.

The coating flavor may be added to the coating either between coats or along with the coating syrup. The flavor may be mixed into the main coating syrup, but more typically it will be held separately. In that case, it can be applied separately but at the same time, or be applied between aliquots of the main coating syrup. Most preferably the flavor will be added while the first coating syrup is still wet. The aqueous coating syrup containing sugar or a polyol is applied as a hot concentrated syrup, which quickly cools, crystallizes and is then dried. While the syrup is in the process of wetting the gum core, a low level of liquid, oil-type flavors may be added, and allowed to dry with the coating. After applying the flavor coat, additional non-flavored syrup coatings are applied to cover the flavor, which may be volatile, to prevent further loss of flavor due to air drying.

In general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, resins, fats and oils, softeners and inorganic fillers. The gum base may or may not include wax. The insoluble gum base can constitute approximately 5% to about 95% by weight of the chewing gum, more commonly the gum base comprises 10% to about 50% of the gum, and in some preferred embodiments approximately 25% to about 35% by weight, of the chewing gum. In pellet gum core formulations, the level of insoluble gum base may be much higher.

In a particular embodiment, the chewing gum base of the present invention contains about 20% to about 60% by weight synthetic elastomer, about 0% to about 30% by weight natural elastomer, about 5% to about 55% by weight elastomer plasticizer, about 4% to about 35% by weight filler, about 5% to about 35% by weight softener, and optional minor amounts (about 1% or less by weight) of miscellaneous ingredients such as colorants, antioxidants, etc.

Synthetic elastomers may include, but are not limited to, polyisobutylene with GPC weight average molecular weights of about 10,000 to about 95,000, isobutylene-isoprene copolymer (butyl elastomer), styrene-butadiene, copolymers having styrene-butadiene ratios of about 1:3 to about 3:1, polyvinyl acetate having GPC weight average molecular weights of about 2,000 to about 90,000, polyisoprene, polyethylene, vinyl acetate-vinyl laurate copolymers having vinyl laurate contents of about 5% to about 50% by weight of the copolymer, and combinations thereof.

Preferred ranges are: 50,000 to 80,000 GPC weight average molecular weight for polyisobutylene; 1:1 to 1:3 bound styrene-butadiene for styrene-budadiene; 10,000 to 65,000 GBC weight average molecular weight for polyvinyl acetate, with the higher molecular weight polyvinyl acetates typically used in bubble gum base; and a vinyl laurate content of 10-45% for vinyl acetate-vinyl laurate.

Natural elastomers may include natural rubber such as smoked or liquid latex and guayule, as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters such as glycerol esters or partially hydrogenated rosin, glycerol esters of polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. The preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Pat. No. 5,286,500.

In addition to a water-insoluble gum base portion, a typical chewing gum composition includes a water-soluble bulk portion and one or more flavoring agents. The water-soluble portion can include bulk sweeteners, high-intensity sweeteners, flavoring agents, softeners, emulsifiers, colors, acidulants, fillers, antioxidants, and other components that provide desired attributes.

Softeners are added to the chewing gum in order to optimize the chewability and mouth feel of the gum. The softeners, which are also known as plasticizers and plasticizing agents, generally constitute between approximately 0.5% to about 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners include both sugar and sugarless components. Bulk sweeteners typically constitute about 5% to about 95% by weight of the chewing gum, more typically, about 20% to about 80% by weight, and more commonly, about 30% to about 60% by weight of the gum. Sugar sweeteners generally include saccharide-containing components commonly known in the chewing gum art, including but not limited to, sucrose, dextrose, maltose, dextrin, dried invert sugar, fructose, galactose, corn syrup solids, and the like, alone or in combination. Sugarless sweeteners include; but are not limited to, sugar alcohols such as sorbitol, mannitol, xylitol, hydrogenated starch hydrolysates, maltitol, and the like, alone or in combination.

High-intensity artificial sweeteners can also be used, alone or in combination, with the above. Preferred sweeteners include, but are not limited to, sucralose, aspartame, N-substituted APM derivatives such as neotame, salts of acesulfame, alitame, saccharin and its salts, cyclamic acid and its salts, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Examples of low caloric bulking agents include: polydextrose; oligo fructose (Raftilose); inulin (Raftilin); fructooligosaccharides (NutraFlora); palatinose oligosaccharide; guar gum hydrolysate (BeneFiber); or indigestible dextrin (Fibersol). However, other low calorie bulking agents can be used.

In general, chewing gum is manufactured by sequentially adding the various chewing gum ingredients to a commercially available mixer known in the art. After the ingredients have been thoroughly mixed, the gum mass is discharged from the mixer and shaped into the desired form such as rolling sheets and cutting into sticks, extruding into chunks or casting into pellets, which are then coated or panned.

Generally, the ingredients are mixed by first melting the gum base and adding it to the running mixer. The base may also be melted in the mixer itself. Color or emulsifiers may also be added at this time. A softener such as glycerin may also be added at this time, along with syrup and a portion of the bulking agent. Further parts of the bulking agent are added to the mixer. Flavoring agents, including compounded flavors, are typically added with the final portion of the bulking agent. Other optional ingredients are added to the batch in a typical fashion, well known to those of ordinary skill in the art.

The entire mixing procedure typically takes from five to fifteen minutes, but longer mixing times may sometimes be required. Those skilled in the art will recognize that many variations of the above described procedure may be followed. The chewing gum may also be made on a continuous basis.

After the ingredients are mixed, the gum mass is formed into pellets or balls. Pellet or ball gum is prepared as conventional chewing gum but formed into pellets that are pillow shaped, or into balls. The pellets/balls are used as cores for the coated product. The cores can be sugar or polyol coated or panned by conventional panning techniques to make a unique coated pellet gum. The weight of the coating may be about 20% to about 50% of the weight of the finished product, but may be as much as 75% of the total gum product.

Conventional panning procedures generally coat with sucrose, but recent advances in panning have allowed use of other carbohydrate materials to be used in place of sucrose. Some of these components include, but are not limited to, sugars such as dextrose, maltose, palatinose, and lactitol; or sugarless bulk sweeteners such as xylitol, sorbitol, hydrogenated isomaltulose, erythritol, maltitol, and other new polyols (also referred to as alditols) or combinations thereof. The coating may thus be a sugar coating or sugarless. These materials may be blended with panning modifiers including, but not limited to, gum arabic, maltodextrins, corn syrup, gelatin, cellulose type materials like carboxymethyl cellulose or hydroxymethyl cellulose, starch and modified starches, vegetables gums like alginates, locust bean gum, guar gum, and gum tragacanth, insoluble carbonates like calcium carbonate or magnesium carbonate and talc. Antitack agents may also be added as panning modifiers, which allow the use of a variety of carbohydrates and sugar alcohols to be used in the development of new panned or coated gum products. Another technique to reduce tack during coating is to use a dry charge. The dry charge can be the same polyol as is used in the liquid addition, but may also include powders such calcium carbonate, magnesium carbonate, or talc.

Another type of pan coating could also be used to complete the coating process. This technique is referred to as a film coating and is more common for pharmaceuticals than in chewing gum, but procedures are similar. A polymer like shellac, zein, or cellulose type material is applied onto a pellet-type product forming a thin film on the surface of the product. The film is applied by mixing the polymer, plasticizer and a solvent (pigments are optional) and spraying the mixture onto the pellet surface. This is done in conventional type panning equipment, or in more advanced side-vented coating pans. When a solvent like an alcohol is used, extra precautions are needed to prevent fires and explosions, and specialized equipment must be used.

The chewing gum may include either a soft shell or a hard shell coating. After a coating film with a sweetener is applied to a chewing gum product, a hard shell sugar or polyol coating may then be applied over the film coated product. In some instances a soft shell sugar or polyol coating may also be used over the film coated product. A film coating may be applied after the shell coating to protect the finished product from the environment. The level of film coating applied to a pellet gum may be generally about 0.5% to about 3% of the gum product. The level of overcoating of the hard or soft shell may be about 20% to about 60%. When the high-intensity sweetener is added with the film coating and not with the sugar/polyol coating, better control of the amount of high-intensity sweetener in the product may be obtained.

As noted above, the coating may contain ingredients such as flavors, as well as dispersing agents, coloring agents, film formers and binding agents. The coating flavor, which is preferably mint, may be used in an amount such that the coating will contain from about 0.1% to about 3% of the flavor, and preferably from about 0.3% to about 2.0% of the flavor.

High-intensity sweeteners contemplated for use in the coating include but are not limited to synthetic substances, saccharin, thaumatin, alitame, saccharin salts, aspartame, N-substituted APM derivatives such as neotame, sucralose and acesulfame-K. The high-intensity sweetener may be added to the coating syrup in an amount such that the coating will contain from about 0.01% to about 2.0%, and preferably from about 0.1% to about 1.0% high-intensity sweetener. Preferably the high-intensity sweetener is not encapsulated.

Dispersing agents are often added to syrup coatings for the purpose of whitening and tack reduction. Dispersing agents contemplated by the present invention to be employed in the coating syrup include titanium dioxide, talc, or any other antistick compound. Titanium dioxide is a presently preferred dispersing agent of the present invention. The dispersing agent may be added to the coating syrup in amounts such that the coating will contain from about 0.1% to about 1.0%, and preferably from about 0.3% to about 0.6% of the agent.

Coloring agents are preferably added directly to the syrup in the dye or lake form. Coloring agents contemplated by the present invention include food quality dyes. Film formers preferably added to the syrup include methyl cellulose, gelatins, hydroxypropyl cellulose, ethyl cellulose, hydroxyethyl cellulose, carboxymethyl cellulose and the like and combinations thereof. Binding agents may be added either as an initial coating on the chewing gum core or may be added directly into the syrup. Binding agents contemplated by the present invention include gum arabic, gum talha (another type of acacia), alginate, cellulosics, vegetable gums and the like.

The coating is initially present as a liquid syrup which contains from about 30% to about 80% or 85% of the coating ingredients previously described herein, and from about 15% or 20% to about 70% of a solvent such as water. In general, the coating process is carried out in a rotating pan. Sugar or sugarless gum core tablets to be coated are placed into the rotating pan to form a moving mass.

The material or syrup which will eventually form the coating is applied or distributed over the gum core tablets. Once the coating has dried to form a hard surface, additional syrup additions can be made to produce a plurality of coatings or multiple layers of hard coating.

In a hard coating panning procedure, syrup is added to the gum core tablets at a temperature range of from about 100 °F (38 °C) to about 240 of (116 °C). Preferably, the syrup temperature is from about 130 °F (54 °C) to about 200 °F (94 °C) throughout the process in order to prevent the polyol or sugar in the syrup from crystallizing. The syrup may be mixed with, sprayed upon, poured over, or added to the gum core tablets in any way known to those skilled in the art.

In general, a plurality of layers is obtained by applying single coats, allowing the layers to dry, and then repeating the process. The amount of solids added by each coating step depends chiefly on the concentration of the coating syrup. Any number of coats may be applied to the gum core tablet. Preferably, no more than about 75-100 coats are applied to the gum core tablets. The present invention contemplates applying an amount of syrup sufficient to yield a coated chewing gum core containing about 10% to about 65% coating.

Those skilled in the art will recognize that in order to obtain a plurality of coated layers, a plurality of premeasured aliquots of coating syrup may be applied to the gum core tablets. It is contemplated, however, that the volume of aliquots of syrup applied to the gum core tablets may vary throughout the coating procedure.

Once a coating of syrup is applied to the gum core tablets, the present invention contemplates drying the wet syrup in an inert medium. A preferred drying medium comprises air. Preferably, forced drying air contacts the wet syrup coating in a temperature range of from about 70 of (21°C) to about 115 °F (46 °C). More preferably, the drying air is in the temperature range of from about 80 °F (27 °C) to about 100 °F (38 °C). The invention also contemplates that the drying air possess a relative humidity of less than about 15 percent. Preferably, the relative humidity of the drying air is less than about 8 percent.

The drying air may be passed over and admixed with the syrup coated gum cores in any way commonly known in the art. Preferably, the drying air is blown over and around or through the bed of the syrup coated gum cores at a flow rate, for large scale operations, of about 2800 cubic feet (79287L) per minute. If lower quantities of material are being processed, or if smaller equipment is used, lower flow rates would be used.

The present invention also contemplates the application of powder material after applying an aliquot of coating syrup to help build up the coating.

Flavors added to a sugar coating of pellet gum are generally preblended with the coating syrup just prior to applying it to the core or added together to the core in one or more coating applications in a revolving pan containing the cores. Generally, the coating syrup is very hot, about 130 °F (54 °C) to 200 °F (93 °C), and the flavor may volatilize if preblended with the coating syrup too early.

The coating syrup is preferably applied to the gum cores as a hot liquid, the sugar or polyol allowed to crystallize, and the coating then dried with warm, dry air. Aliquots of the syrup is preferably applied in about 30 to 80 applications to obtain a hard shell coated product having an increased weight gain of about 25% to 75%. The flavor is applied with one, two, three or even four or more of these coating applications. Each time flavor is added, several non-flavored coatings are applied to cover the flavor before the next flavor coat is applied. This reduces volatilization of the flavor during the coating process. For mint flavors such spearmint, peppermint and wintergreen, some of the flavor components are volatilized, but sufficient flavor remains to give a product having a strong, high impact flavor.

### EXAMPLES

The following examples of the invention are provided by way of explanation and illustration.

As noted earlier, the gum formulas can be prepared as sugar or sugarless type formulations and made in a pellet or pillow shape or a round ball or any other shape of product for coating/panning. However, gum formulas for pellet cores are generally adjusted to a higher level of gum base to give a more consumer acceptable size of gum bolus.

Keeping this in mind, if a coating of about 25% of the total product is added to a pellet core as sugar or polyols, the gum base in the pellet core should also be increased by 25%. Likewise, if a 33% coating is applied, the base levels should also be increased by 33%. As a result, gum cores are usually formulated with about 25% to about 50% gum base with a corresponding decrease in the other ingredients except flavor. Generally flavor levels in the gum increase with the level of gum base as the base tends to bind flavors into the gum and more flavor is needed to give a good flavorful product. However flavors can also be added to the coating to give increased flavor impact and more flavor perception.

A wide range of changes and modifications to the embodiments of the invention described above will be apparent to persons skilled in the art. For example, while the invention is described with respect to hard-coated chewing gum, it will be appreciated that the process is applicable to coating comestibles including other food products, such as candies or other confectionaries, as well as other orally ingested products such as pharmaceuticals, in which a coating with a high-intensity sweetener would have utility.

Some typical sugar type gum core formulations are shown in Table 1 that can be used as cores that are coated.

**Table 1**

| | **Ex. 1** | **Ex. 2** | **Ex.3** |
|---|---|---|---|
| Sucrose | 46% | 45% | 42% |
| Gum Base | 30% | 35% | 40% |
| Com syrup | 20% | 15% | 12% |
| Glycerin | 1% | 1% | 1% |
| Liquid flavor blend | 1% | 1.5% | 2% |
| Compounded flavor particles | 2% | 2.5% | 3% |

Higher levels of base may be used with a corresponding decrease in other ingredients. Also, other sugars besides sucrose may be used in the gum core.

The core formulas of Examples 1-3 may be coated with the following coating formulas:

**Table 2**

| | **Ex. 4** | **Ex. 5** | **Ex. 6** |
|---|---|---|---|
| Sugar | 96.8% | 95% | 93.6% |
| Gum arabic | 2% | 3% | 4% |
| Titanium dioxide | 0.5% | 1% | 1% |
| Flavor | 0.5% | 0.8% | 1.2% |
| Wax | 0.1% | 0.1% | 0.1% |
| Talc | 0.1% | 0.1% | 0.1% |

Some typical sugarless gum core formulas are shown in Table 3.

**Table 3**

| | **Ex.7** | **Ex.8** | **Ex.9** | **Ex. 10** | **Ex.11** | **Ex.12** | **Ex. 13** |
|---|---|---|---|---|---|---|---|
| Gum Base | 33% | 30% | 30% | 31% | 32% | 30% | 31% |
| Calcium Carbonate | -- | 14.9% | 5% | 13.9% | 8.9% | 14.9% | 13.9% |
| Sorbitol | 43.1% | 40.2% | 45.5% | 43.3% | 43.2% | 42% | 42.2% |
| Mannitol | 9-6% | 5% | 5% | -- | -- | -- | -- |
| Glycerin | -- | 4% | -- | 3.5% | 8% | 5.5% | 4% |
| Sorbitol Liquid | 10% | -- | 10% | -- | -- | -- | -- |
| Liquid flavor blend | 1.5% | 2% | 1.5% | 2.4% | 2% | 2.5% | 3% |
| Encapsulated High Intensity Sweetener | 0.8% | 0.8% | 1% | 1.8% | 1.8% | 1.5% | 1.8% |
| Compounded flavor particles | -2% | 2% | 2% | 3% | 3% | 2-5% | 3% |
| Water | -- | 1.1% | -- | 1.1% | 1.1% | 1.1% | 1.1% |

Examples 7-10 may be made with a spearmint - fruit type flavor and can be coated with a Spearmint type flavor. Examples 11-13 may be made with a peppermint fruit type flavor and may be coated with a Peppermint type flavor.

Like the cores for sugar-containing gums, the base formulation can be increased in proportion to the amount of coating applied to the core. Generally; the base level may be increased to about 30-46% with the other ingredients proportionally reduced.

The following coating formulas may be applied to the gum cores of Examples 7-13:

**Table 4**

| | **Ex. 14** | **Ex. 15** | **Ex. 16** | **Ex. 17** | **Ex. 18** | **Ex. 19** | **Ex. 20** |
|---|---|---|---|---|---|---|---|
| Maltitol | 85.7% | 77.3% | 77.3% | 78% | 77.5% | 77.1% | 82.1% |
| Maltitol Powder | 6% | 12% | 6% | 6% | 12% | 6% | 4% |
| Gum Arabic | 6% | 8% | 8% | 7% | 8% | 8% | 7% |
| Calcium Carbonate | -- | -- | 6% | 6% | -- | 6% | 4% |
| Titanium Dioxide | 0.8% | 0.7% | 0.7% | 0.8% | 0.7% | 0.7% | 0.8% |
| Acesulfame K | 0.3% | 0.4% | 0.4% | 0.4% | 0.4% | 0.4% | 0.3% |
| Flavor | 1% | 1.4% | 1.4% | 1.6% | 1.2% | 1.6% | 1.6% |
| Talc | 0.1% | 0.1% | 0.1% | 0.1% | 0.1% | 0.1% | 0.1% |
| Wax | 0.1% | 0.1% | 0.1% | 0.1% | 0.1% | 0.1% | 0.1% |

The coatings of Examples 14-17 may include a spearmint type flavor and the coatings of Examples 18-20 may be coated with a peppermint type flavor.

It should be appreciated that the methods and compositions of the present invention are capable of being incorporated in the form of a variety of embodiments, only a few of which have been illustrated and described above. The invention may be embodied in other forms without departing from its spirit or essential characteristics. It will be appreciated that the addition of some other ingredients, process steps, materials or components not specifically included will have an adverse impact on the present invention. The best mode of the invention may therefore exclude ingredients, process steps, materials or components other than those listed above for inclusion or use in the invention. However, the described embodiments are to be considered in all respects only as illustrative and not restrictive, and the scope of the invention is, therefore, indicated by the appended claims rather than by the foregoing description. All changes which come within the meaning and range of equivalency of the claims are to be embraced within their scope.

## Claims

1. A coated chewing gum product comprising:
a) a core comprising:
i) gum base;
ii) particles comprising a compounded flavor; and
iii) a liquid flavor portion comprising a mint flavor and a fruit flavor; and
b) a coating portion surrounding the core and comprising a coating flavor.

2. The coated chewing gum of claim 1 wherein the compounded flavor comprises a mint flavor.

3. The coated chewing gum of claim 1 wherein the mass ratio of the mint flavor to the fruit flavor in the liquid flavor portion is between 1:1 and 10:1.

4. The coated chewing gum of claim 1 wherein the fruit flavor is selected from the group consisting of berry, melon, lime, orange, pear, lavender, grape, apple, peach, lemon, tea-type and mixtures thereof.

5. The coated chewing gum of claim 1 wherein the coating flavor comprises a mint flavour.

6. The coated chewing gum of claim 1 wherein the liquid flavor portion comprises a physiological cooling agent.

7. The coated chewing gum of claim 1 wherein the compounded flavor is produced by a method selected from the group consisting of encapsulation, extrusion, fluid bed coating, and granulation.

8. The coated chewing gum of claim 7 wherein the compounded flavor is produced by agglomeration to increase the particle size.

9. The coated chewing gum of claim 1 wherein the coating portion comprises a hard shell coating.

10. The coated chewing gum of claim 1 wherein the coating portion comprises a sugar.

11. The coated chewing gum of claim 1 wherein the coating portion comprises a polyol.

12. The coated chewing gum of claim 1 wherein, when chewed by a user, the coated chewing gum provides a strong mint flavor followed by a subtle fruit flavor.

13. The coated chewing gum of claim 1 wherein the particles comprise a color distinct from the gum base.

14. A method of making the coated chewing gum product as defined in any one of the preceding claims comprising the steps of:
a) providing particles comprising a compounded flavor;
b) providing a liquid flavour portion comprising a mint flavor and a fruit flavor;
c) mixing the particles and the liquid flavor portion with gum base to provide chewing gum cores;
d) providing a coating syrup comprising a coating flavor; and
e) applying the coating syrup to the cores and drying the syrup to produce a coating on the cores.

## Patentansprüche

1. Beschichtetes Kaugummiprodukt, welches Folgendes aufweist:
a) einen Kern, welcher Folgendes aufweist:
i) eine Gummibasis;
ii) Teilchen, welche einen zusammengesetzten Geschmack aufweisen;
iii) einen flüssigen Geschmacksanteil, welcher einen Minzegeschmack oder einen Fruchtgeschmack aufweist; und
b) einen Beschichtungsanteil, welcher den Kern umgibt und einen Beschichtungsgeschmack aufweist.

2. Beschichteter Kaugummi nach Anspruch 1, **dadurch gekennzeichnet, dass** der zusammengesetzte Geschmack einen Minzegeschmack aufweist.

3. Beschichteter Kaugummi nach Anspruch 1, **dadurch gekennzeichnet, dass** das Masseverhältnis von Minzegeschmack zu Fruchtgeschmack in dem flüssigen Geschmacksanteil zwischen 1:1 und 10:1 beträgt.

4. Beschichteter Kaugummi nach Anspruch 1, **dadurch gekennzeichnet, dass** der Fruchtgeschmack aus der Gruppe bestehend aus Beere, Melone, Limette, Orange, Birne, Lavendel, Traube, Apfel, Pfirsich, Zitrone, Teesorten und Kreuzungen davon ausgewählt wird.

5. Beschichteter Kaugummi nach Anspruch 1, **dadurch gekennzeichnet, dass** der Beschichtungsgeschmack einen Minzegeschmack aufweist.

6. Beschichteter Kaugummi nach Anspruch 1, **dadurch gekennzeichnet, dass** der flüssige Geschmacksanteil ein physiologisches Kühlmittel aufweist.

7. Beschichteter Kaugummi nach Anspruch 1, **dadurch gekennzeichnet, dass** der zusammengesetzte Geschmack durch ein Verfahren erzeugt wird, welches aus der Gruppe bestehend aus Einkapselung, Extrusion, Fließbettbeschichtung und Granulierung ausgewählt wird.

8. Beschichteter Kaugummi nach Anspruch 7, **dadurch gekennzeichnet, dass** der zusammengesetzte Geschmack durch Agglomeration zur Erhöhung der Partikelgröße erzeugt wird.

9. Beschichteter Kaugummi nach Anspruch 1, **dadurch gekennzeichnet, dass** der Beschichtungsanteil eine Hartschalenbeschichtung aufweist.

10. Beschichteter Kaugummi nach Anspruch 1, **dadurch gekennzeichnet, dass** der Beschichtungsanteil Zucker aufweist.

11. Beschichteter Kaugummi nach Anspruch 1, **dadurch gekennzeichnet, dass** der Beschichtungsanteil Polyol aufweist.

12. Beschichteter Kaugummi nach Anspruch 1, **dadurch gekennzeichnet, dass** wenn der beschichtete Kaugummi von einem Verbraucher gekaut wird, er einen starken Minzegeschmack gefolgt von einem zarten Fruchtgeschmack bereitstellt.

13. Beschichteter Kaugummi nach Anspruch 1, **dadurch gekennzeichnet, dass** die Partikel eine Farbe aufweisen, welche sich von der Farbe der Gummibasis unterscheidet.

14. Verfahren zur Herstellung des beschichteten Kaugummiprodukts gemäß Definition in einem der vorhergehenden Ansprüche, wobei das Verfahren die folgenden Schritte aufweist:
a) Bereitstellung von Partikeln bzw. Teilchen, welche einen zusammengesetzten Geschmack aufweisen;
b) Bereitstellung eines flüssigen Geschmacksanteils, welcher einen Minzegeschmack und einen Fruchtgeschmack aufweist;
c) Mischen der Partikel bzw. Teilchen und des flüssigen Geschmacksanteils mit Gummibasis zur Bereitstellung von Kaugummi-Kernen;
d) Bereitstellung eines Beschichtungssirups, welcher einen Beschichtungsgeschmack aufweist; und
e) Aufbringen des Beschichtungssirups auf die Kerne und Trocknen des Sirups zur Erzeugung einer Beschichtung auf den Kernen.

## Revendications

1. Produit de gomme à mâcher enrobé comprenant:
a) un noyau comprenant:
i) une base de gomme;
ii) des particules comprenant une saveur composée; et
iii) une portion d'arôme liquide comprenant une saveur de menthe et une saveur de fruit; et
b) une portion d'enrobage entourant le noyau et comprenant une saveur d'enrobage.

2. Gomme à mâcher enrobé selon la revendication 1, où la saveur composée comprend une saveur de menthe.

3. Gomme à mâcher enrobé selon la revendication 1, dans laquelle le rapport de masse de la saveur de menthe à la saveur de fruit dans la portion de saveur liquide est entre 1:1 et 10:1.

4. Gomme à mâcher enrobé selon la revendication 1, où la saveur de fruit est sélectionnée dans le groupe consistant en baies, melon, lime, orange, poire, lavande, raisin, pomme, pêche, citron, type de thé et leurs mélanges.

5. Gomme à mâcher enrobé selon la revendication 1, où la saveur d'enrobage comprend une saveur de menthe.

6. Gomme à mâcher enrobé selon la revendication 1, dans laquelle la portion de saveur liquide comprend un agent de refroidissement physiologique.

7. Gomme à mâcher enrobé selon la revendication 1, dans laquelle la saveur composée est produite par une méthode sélectionnée dans le groupe consistant en encapsulation, extrusion, enrobage à lit de fluide et granulation.

8. Gomme à mâcher enrobé selon la revendication 7, dans laquelle la saveur composée est produite par agglomération pour augmenter la taille des particules.

9. Gomme à mâcher enrobé selon la revendication 1, dans laquelle la portion d'enrobage comprend un enrobage de coque dure.

10. Gomme à mâcher enrobé selon la revendication 1, dans laquelle la portion d'enrobage comprend un sucre.

11. Gomme à mâcher enrobé selon la revendication 1, dans laquelle la portion d'enrobage comprend un polyol.

12. Gomme à mâcher enrobé selon la revendication 1, dans laquelle, lorsqu'elle est mâchée par un utilisateur, la gomme à mâcher enrobée dégage une forte saveur de menthe suivie d'une saveur de fruit subtile.

13. Gomme à mâcher enrobé selon la revendication 1, dans laquelle les particules comprennent une couleur distincte de la base de la gomme.

14. Procédé de fabrication du produit de gomme à mâcher enrobé tel que défini dans l'une quelconque des revendications précédentes, comprenant les étapes de:
a) réaliser des particules comprenant une saveur composée;
b) réaliser une portion de saveur liquide comprenant une saveur de menthe et une saveur de fruit;
c) mélanger les particules et la portion de saveur liquide avec la base de la gomme pour réaliser des noyaux de gomme à mâcher;
d) réaliser un sirop d'enrobage comprenant une saveur d'enrobage; et
e) appliquer le sirop d'enrobage aux noyaux et sécher le sirop pour produire une enrobage des noyaux.
